(19) **Europäisches Patentamt**
**European Patent Office**
**Office européen des brevets**

(11) **EP 0 859 356 B1**

(12) **EUROPEAN PATENT SPECIFICATION**

(45) Date of publication and mention
of the grant of the patent:
**27.11.2002 Bulletin 2002/48**

(51) Int Cl.⁷: $G11B\ 7/00$, G11B 7/135,
G11B 7/125

(21) Application number: **98301050.5**

(22) Date of filing: **13.02.1998**

(54) **Optical pickup having an objective lens compatible with a plurality of optical disk formats**

Optischer Kopf mit einer zu vielen optischen Plattenformaten kompatiblen Objektivlinse

Tête de lecture optique avec une lentille d'objectif compatible avec plusieurs formats de disque optique

(84) Designated Contracting States:
**DE GB NL**

(30) Priority: **13.02.1997 KR 974273**

(43) Date of publication of application:
**19.08.1998 Bulletin 1998/34**

(60) Divisional application:
**02077195.2 / 1 256 941**

(73) Proprietor: **Samsung Electronics Co., Ltd.**
**Suwon City, Kyungki-do (KR)**

(72) Inventors:
• **Yoo, Jang-Hoon**
**Daerim 3-dong, Youngdungpo-gu, Seoul (KR)**
• **Chung, Chong-Sam**
**Pundang-gu, Sungnam-city, Kyungki-do (KR)**

• **Lee, Chul-Woo**
**Ichon 1-dong, Yongsan-gu, Seoul (KR)**
• **Cho, Kun-Ho**
**Paldal-gu, Suwon-city, Kyungki-do (KR)**

(74) Representative: **Chugg, David John**
**Appleyard Lees,**
**15 Clare Road**
**Halifax, West Yorkshire HX1 2HY (GB)**

(56) References cited:
**EP-A- 0 731 458     EP-A- 0 742 554**
**EP-A- 0 776 004     EP-A- 0 838 812**

• **PATENT ABSTRACTS OF JAPAN vol. 096, no. 003, 29 March 1996 & JP 07 302437 A (TOSHIBA CORP), 14 November 1995**

**Description**

The present invention relates to an optical pickup including an objective lens having a function of forming an optical spot on an information recording surface of optical recording media of different formats, and more particularly, to an optical pickup having an objective lens which is compatibly used in a plurality of optical disks each having a different format, such as a digital versatile disk (DVD), a CD-Recordable (CD-R), CD-Rewritable (CD-RW), a Compact Disc (CD) and a Laser Disk (LD).

A recording medium for recording and reproducing information such as video, audio or data at high density, is a disk, a card or a tape. However, a disk-type recording medium is primarily used. Recently, an optical disk system has been developed in the form of an LD, a CD and a DVD. However, when optical disks having respectively different format, such as DVD, CD-R, CD, CD-RW and LD are compatibly used, optical aberration occurs due to the variation of disk thickness and wavelength. Thus, an optical pickup which is compatible with the different formats of the disks as well as removes the above-mentioned optical aberration has been actively studied. In the result of such a study, optical pickups which are compatible with the different formats have been fabricated.

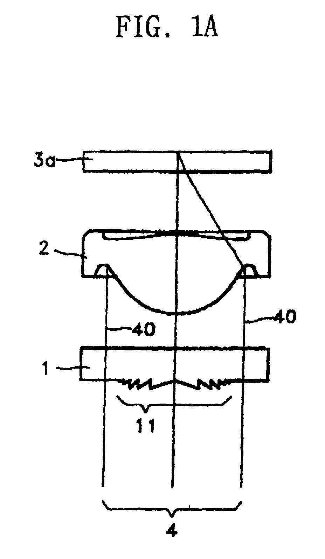

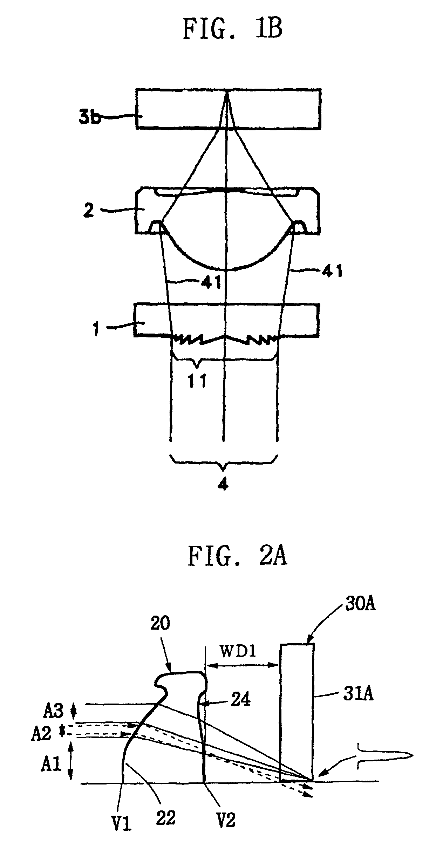

Figures 1A and 1B show a part of a conventional optical pickup which is compatible with different formats. Figure 1A shows a case where light is focused on a thin optical disk and Figure 1B is a case where light is focused on a thick optical disk. In Figures 1A and 1B, a reference numeral 1 denotes a hologram lens, 2 denotes a refractive objective lens, 3a denotes a thin optical disk, and 3b denotes a thick optical disk. Light 4 output from an unshown light source is diffracted by a grating (lattice) pattern 11 of the hologram lens 1, to accordingly generate non-diffracted zero-order light 40 and diffracted first-order light 41, respectively. The non-diffracted zero-order light 40 is focused on an information recording surface of an optical disk 3a by the objective lens 2. The diffracted first-order light 41 is focused on an information recording surface of an optical disk 3b by the objective lens 2. Therefore, the optical pickup shown in Figures 1A and 1B uses the non-diffracted zero-order light 40 and the diffracted first-order light 41 to record information on or read the information from the optical disks 3a and 3b of different thicknesses, respectively.

Another conventional technology is disclosed in Japanese Patent Laid-open Publication No. Heisei 7-302437, published on November 14, 1995 which forms the basis for the preambles of the independent claims 1 and 5. An objective lens of an optical head apparatus disclosed in the above publication has, from the centre of the objective lens an odd-numbered region(s) having a focal point congruent with an information recording surface of a thin optical disk, and an even-numbered region(s) having a focal point congruent with an information recording surface of a thick optical disk. Thus, in the case of the thin optical disk, light transmitted through the odd-numbered region(s) of the objective lens is used to read information from the thin optical disk. Also, in the case of the thick optical disk, light transmitted through the even-numbered region(s) of the objective lens is used to read information from the thick optical disk.

However, since the optical pickup shown in Figures 1A and 1B divides the incident light into zero order light and first order light, the efficiency of a light use is lowered. That is, since the incident light is divided into zero order light and first order light by the hologram lens 1, only the zero-order light or the first-order light is used to record the information on or read the information from the optical disk, and the optical pickup uses only 15% or so of the incident light, to thereby lower the light use efficiency. Also, according to the thickness of the used optical disk, only one of the zero-order light and the first-order light reflected from the corresponding optical disk 3a or 3b contains actually read information. Thus, the light having no information functions as noise in a light detection operation with respect to the light containing information. The above problem can be overcome by processing the hologram lens 1 of the lens device. However, when working the hologram lens 1, an etching process for producing a fine hologram pattern requires a high precision. Thus, the manufacturing cost increases.

In the case of the prior art disclosed in Japanese Patent Laid-open Publication No. Heisei 7-302437, the light transmitted through only one of the odd-numbered region(s) and the even-numbered region(s) is used. As a result, the light use efficiency is lowered. Also, since the number of the focal points is always two, the light having no information functions as noise during the light detection, which makes it difficult to detect information from the light reflected from the optical disk.

European Patent application EP-A-776004 (Konica) discloses an optical system for recording and reproducing an optical recording medium having a light source, a coupling lens for converting a diverging light emergent from the light source to a converging light, and an objective lens for further converging the converted converging light and for focusing on an information recording surface of an optical information recording medium. Figure 58 of this citation shows a form of objective lens having concentric, adjacent, plural and ring shaped lens faces having their centres on an optical axis each having different refracting power and arranged such that a light flux entering the objective lens is divided by ring shaped lens surfaces and is converged on the recording surface of an optical information recording medium, the lens being arranged such that convergence occurs correctly for both a 0.6mm substrate and a 1.2mm substrate.

European Patent Application EP-A-0838812 (Konica) shows in Figures 2 thereof another optical pickup apparatus having an objective lens similar to that described in relation to EP 776004 described above.

With a view to solve or reduce the above problem it is an aim of preferred embodiments of the present invention to provide an optical pickup which has an excellent signal detection function independent of a disk format thereof.

It is another aim to provide an objective lens which compatibly is used with at least two substrates having respectively different thicknesses.

Additional aims and advantages of the invention will be set forth in part in the description which follows and, in part, will be obvious from the description, or may be learned by practice of the invention.

According to a first aspect of the present invention, there is provided an objective lens compatible with at least first and second media having respective different thicknesses and information recording surfaces which store information, the objective lens comprising: an inner area, an annular lens area and an outer area centered at a vertex, the annular lens area having a ring shape and dividing the inner area from the outer area, wherein the inner area, the annular lens area and the outer area have aspherical shapes so that, in the case of reading the first medium, light transmitted through the inner area and the outer area is focused into a single light spot by which information is read from the information recording surface of the first medium and light transmitted through the annular lens area is scattered so as not to be focused on the information recording surface of the first medium and, in the case of reading the second medium, the light transmitted through the inner area and the annular lens area is focused into a single light spot by which information is read from the information recording surface of the second medium and light transmitted through the outer lens area is scattered so as not to be focused on the information recording surface of the second medium and wherein the second medium is thicker than the first medium the objective lens being characterised by a difference $\Delta Z$ between a focal distance of the annular lens area and that of the inner area is the same as a defocusing amount determined by the following relationship: $\Delta Z = -(2W_{40})/(NA)^2$ wherein NA is a numerical aperture in the inner area and $W_{40}$ is a spherical aberration coefficient when the second medium is used.

Preferably, a surface of the annular lens area forms a step difference for the surface of one of the inner and outer areas.

Preferably, the surface of the annular lens area forms the step difference with the surface of the inner area, wherein the step difference is a value such that a light path difference between the light passing through the inner area and the light passing through the annular lens area is an integer multiple of a wavelength of the light emitted from the light source.

Preferably, the surface of the annular lens area forms the step difference with the surface of the outer area, wherein the step difference is a value such that a light path difference between the light passing through the inner area and the light passing through the annular lens area is an integer multiple of a wavelength of the light emitted from the light source.

According to another aspect of the invention, there is provided an optical pickup in an optical device compatible with at least first and second optical recording media having different thicknesses, the optical pickup comprising: a first light source to emit light toward said objective lens, the objective lens being arranged to focus the fist light emitted from the light source into a single light spot on the information recording surface of a given optical recording medium; and a light detector to detect light transmitted through the objective lens after being reflected from the information recording surface of the optical recording medium on which the light spot is focused, the objective lens being compatible with at least first and second media having respective different thicknesses and information recording surfaces which store information, the objective lens comprising: an inner area, an annular lens area and an outer area centered at a vertex, the annular lens area having a ring shape and dividing the inner area from the outer area, wherein the inner area, the annular lens area and the outer area have aspherical shapes so that, in the case of reading the first medium, light transmitted through the inner area and the outer area is focused into a single light spot by which information is read from the information recording surface of the first medium and light transmitted through the annular lens area is scattered so as not to be focused on the information recording surface of the first medium and, in the case of reading the second medium, the light transmitted through the inner area and the annular lens area is focused into a single light spot by which information is read from the information recording surface of the second medium and light transmitted through the outer lens area is scattered so as not to be focused on the information recording surface of the second medium and wherein the second medium is thicker than the first medium the optical pickup being characterised in that in the objective lens there is a difference $\Delta Z$ between a focal distance of the annular lens area and that of the inner area is the same as a defocusing amount determined by the following relationship: $\Delta Z = -(2W_{40})/(NA)^2$ wherein NA is a numerical aperture in the inner area and $N_{40}$ is a spherical aberration coefficient when the second medium is used.

Preferably, the objective lens has a working distance in such a manner that the light transmitted through the inner area is focused into a single light spot having minimum optical aberration on the information recording surface of the second medium during reading of the second medium.

The aspherical surface shape of the inner area may be such that the light transmitted through the inner area is focused into a single light spot on the information recording surface of the first optical medium, and the same light is focused into an optical spot having minimum optical aberration on the information recording surface of the second optical medium during reproduction of the second optical medium with said working distance.

Preferably, the aspherical shape of the annular lens area is such that the light transmitted through the annular lens area is focused into a single light spot having no spherical aberration on the information recording surface of the second optical recording medium during reproduction of the second optical recording medium having a thick substrate.

Said second light source may emit light of a different wavelength to light emitted from the first light source.

The optical pickup may further comprise a beam splitter having a beam splitting characteristic with respect to each of the plurality of the beams respectively emitted from the first light source and the at least second light source.

Preferably, the inner area of the objective lens has a numerical aperture value NA which satisfies the following equation: $0.8\lambda/NA\sim$ spot size where $\lambda$ represents the wavelength of light emitted from the light source and the spot size is a size of a spot that the light passing through the objective lens forms on a disk.

The objective lens may have a defocused coefficient $W_{20}$ which minimises an optical aberration according to the following equation: $W_{20}=-W_{40}$, wherein $W_{40}$ is a spherical aberration coefficient produced due to a difference in the first and second thicknesses.

Preferably, a defocus amount $\Delta Z$ of the objective lens follows the following equation: $\Delta Z=-(2W_{40}) / (NA)^2$, wherein NA is a numerical aperture value of the inner area.

The optical pickup may further comprise: a separation unit to separate incident light transmitted from said light source from light reflected by the disk.

The optical pickup may further comprise: a collimating lens disposed in a linear path between the objective lens and the light detector to collimate the incident light separated by the separation unit and to transmit the reflected light from the disk towards the separation unit; and a light detection lens to focus the reflected light passing through the separation unit toward the detector.

For a better understanding of the invention, and to show how embodiments of the same may be carried into effect, reference will now be made, by way of example, to the accompanying diagrammatic drawings, in which:

Figures 1A and 1B show a conventional optical pickup having a hologram lens and a refractive objective lens;

Figure 2A shows that an objective lens according to first and second embodiments of the present invention forms an optical spot on an information recording surface of a thin optical disk;

Figure 2B shows that the objective lens according to the first and second embodiments of the present invention forms an optical spot on an information recording surface of a thick optical disk;

Figure 2C shows an objective lens according to the first and second embodiments of the present invention as viewed from a light source, which shows sections of an inner area, an annular lens area and an outer area of the objective lens;

Figure 2D shows an enlarged annular lens area portion of an ideal annular lens of the present invention;

Figure 3A shows longitudinal spherical aberration of the objective lens according to the first embodiment of the present invention during readout of a thick optical medium;

Figure 3B shows wavefront aberration of the objective lens according to the first embodiment of the present invention during readout of a thick optical medium;

Figure 4 shows an objective lens according to the first embodiment of the present invention;

Figure 5 shows an enlarged annular lens portion of the objective lens according to the second embodiment of the present invention;

Figure 6 shows a first type optical system of an optical pickup having a single light source adopting an objective lens according the first and second embodiments of the present invention;

Figure 7 shows a modification of the optical system of the optical pickup shown in Figure 6;

Figure 8A shows a second type of optical pickup having an objective lens, two light sources and a single light detector according to the first and second embodiments of the present invention;

Figure 8B shows a modification of the optical pickup shown in Figure 8A;

Figure 9 shows a third type of optical pickup having an objective lens, two light sources and two light detectors according to the first and second embodiments of the present invention;

Figure 10 shows distribution of the light beams in the light detector when a thin optical disk is read by using the optical pickup according to the first and second embodiments of the present invention; and

Figure 11 shows distribution of the light beams in the light detector when a thick optical disk is read by using the objective lens according to the first and second embodiments of the present invention.

Reference will now be made in detail to the present preferred embodiments of the present invention, examples of which are illustrated in the accompanying drawings, wherein like reference numerals refer to the like elements throughout. The embodiments are described below in order to explain the present invention by referring to the Figures.

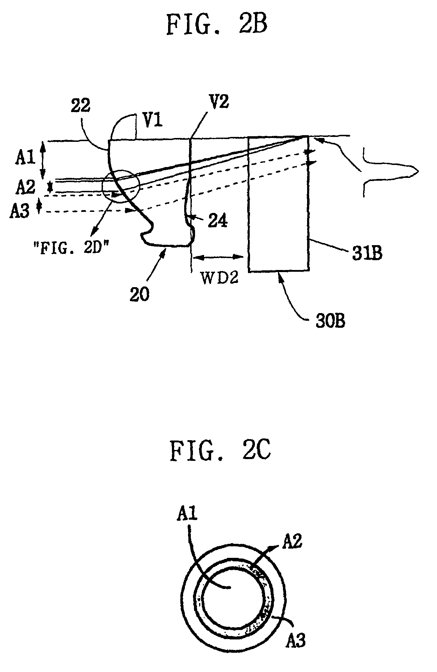

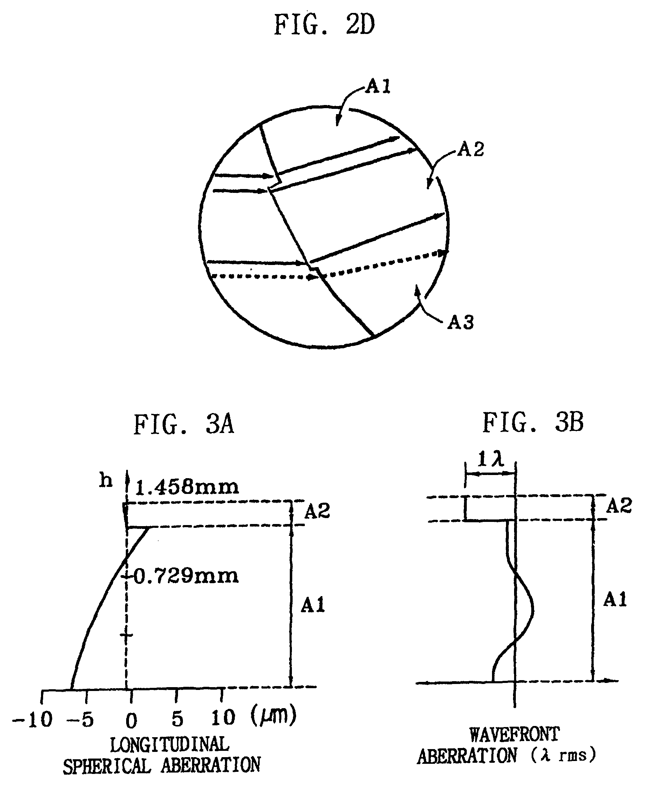

Figures 2A through 2D show an objective lens according to the present invention. Figure 2A shows optical paths when a working distance of the objective lens 20 is "WD1" during readout of a thin optical disk 30A. Figure 2B shows optical paths when a working distance of the objective lens 20 is "WD2" during readout of a thick optical disk 30B. Figure 2C shows an objective lens 20 viewed from a light source, which shows that a lens surface 22 lying in the light source side of the objective lens 20 is divided into an inner area (central region) A1, an annular lens area (intermediate region) A2 and an outer area (periphery region) A3. Figure 2D is an enlarged view of the portion of the annular lens area A2 of the objective lens 20, where the objective lens 20 is ideally manufactured.

In the objective lens 20 according to the first embodiment of the present invention, the lens surface 22 which lies in the light source side of the objective lens 20 is divided into the inner area A1, the annular lens area A2 and the outer area A3, by the annular lens area A2 having a ring form such as an elliptical or circular shape with a vertex V1 of the lens surface 22 in the center. Here, the vertex V1 is a point where the axis of the objective lens 20 intersects the lens surface 22 of the light source side. The inner area A1 and the outer area A3 have aspherical surface shapes which are optimized to form a best focal point on the information recording surface 31A of the thin optical disk 30A. Also, the inner area A1 is fabricated to generate a little spherical aberration on the information recording surface 31B of the thick optical disk 30B, but to have a sufficiently small spherical aberration for readout of the thick optical disk 30B. Particularly, the inner area A1 has a numerical aperture NA meeting the following relationship 1 to provide an optimized optical spot for reproducing the thick optical disk 30B such as an existing CD. The inner area A1, annular lens area A2, and outer area A3 respectively correspond to a near axis region, an intermediate axis region and a far axis region of incident light.

When light of 650nm wavelength is used, it is preferable that the numerical aperture NA of the objective lens 20 is 0.37 or more to reproduce the existing CD.

$$0.8\lambda/NA \sim \text{spot size} \qquad (1)$$

Here, $\lambda$ represents the wavelength of the light, and NA represents the numerical aperture of the inner area A1. Assuming that a working distance of the objective lens 20 is "WD1" where the best focal point is formed by the inner area A1 and the outer area A3, the light (rays) transmitted through the inner area A1 and the outer A3 form the optimal spot on the information recording surface 31A of the thin optical disk 30A with respect to the working distance "WD1" and do not generate spherical aberration. Also, when the light transmitted through the inner area A1 of the objective lens 20 is used, the existing optical disk 30B such as a relatively thick CD is reproduced. This technology has been disclosed in Korean patent application No. 96-3605. However, a numerical aperture not less than 0.4 is required to reproduce an optical disk which uses a smaller sized spot such as an LD among the existing optical disks. To make large NA above 0.37, when the annular lens area A2 has an aspherical surface extending the aspherical surface shape of the inner area A1, the light transmitted through the annular lens area A2 during reproduction of the LD generates a larger optical aberration to such a degree that the LD cannot be reproduced. Therefore, the annular lens area A2 corrects such optical aberration, and has an aspherical surface shape by which the light transmitted through the annular lens area A2 corrects the optical aberration at a best position where a focal point is formed by the inner area A1.

Figure 2B shows an optical path during reproduction of the thick optical disk 30B, and shows that the light transmitted through the outer area A3 does not form a spot on the optical disk and is scattered and the light transmitted through the areas A1 and A2 are focused on the thick disk surface 31B. Meanwhile, when the working distance of the objective lens 20 is "WD2", the light transmitted through the annular lens area A2 is scattered at the information recording surface 31A of the optical disk 30A. The solid lines in Figure 2A show the optical paths of the light transmitted through the inner area A1 and the outer area A3 when the working distance is "WD1". The dotted line shows the optical path of the light transmitted through the annular lens area A2 in which the light is scattered.

Figure 3A is a graph showing aberration for explaining a working distance and optical longitudinal spherical aberration of the objective lens 20 during readout of a thick optical disk 30B. Since the inner area A1 has spherical aberration when the objective lens 20 reproduces the thick optical disk 30B, the objective lens 20 is optically defocused, that is, the working distance is adjusted, to thereby have a minimal value of the optical aberration. A spherical aberration coefficient $W_{40}$ produced due to the difference of a disk thickness between the thin optical disk 30A and the thick optical disk 30B meets the following equation 2.

$$W_{40} = \frac{n^2-1}{8_{n_3}} d(NA)^4 = 0.6\ \mu m \qquad (2)$$

Generally, the optical aberration including spherical aberration is expressed as the following equation (3).

$$W = W_{20}h^2 + W_{40}h^4 \qquad\qquad (3)$$

Here, $W_{20}$ is a defocus coefficient and h is a marginal (light) ray height.
The square root of the optical aberration meets the following equation 4.

$$\sigma^2 w = \sqrt{(\overline{W^2} - (\overline{W}^2))} = \frac{1}{12}[W_{20} + W_{40}]^2 + \frac{1}{180}W_{40}{}^2$$

Here,

$$\overline{W^2} = \frac{1}{3}W_{20}{}^2 + \frac{1}{2}W_{20}W_{40} + \frac{1}{5}W_{40}{}^2,$$

$$\overline{W} = \frac{1}{2}W_{20} + \frac{1}{3}W_{40}$$

Therefore, the condition of the defocus coefficient which minimizes the optical aberration is $W_{20} = -W_{40}$, and the actual defocus amount complies with the following equation (5).

$$\Delta Z = \frac{2W_{40}}{-(NA)^2} = 8.3\mu m \qquad (5)$$

Here, the variation of the numerical aperture (NA) of the inner area, the disk refractive index (n) and the disk thickness (d) are as follows: NA=0.38, n=1.58 and d=0.6mm. If the annular lens area A2 is designed so that a best spot is formed and spherical aberration does not occur with respect to the thick optical disk 30B being defocussed by 8.3µm, the longitudinal spherical aberration graph as shown in Figure 3A can be obtained. In this case, the difference between a focal length formed by the inner area A1 and a focal length formed by the annular lens area A2 becomes 8.3µm owing to the defocus amount of 8.3µm at the optical axis. And the focal length is 3.3025mm for the inner area A1 and 3.3111mm for the annular lens area A2 according to the calculation by a commercial program (s/w) for optics. The 8.3µm is a result from a third order calculation by hand, but 8.6µm is a result from a high order calculation including the third order by using the optical (s/w) program.
If the working distance of the objective lens 20 is changed from "WD1" to "WD2" which makes the optical aberration by the light transmitted through the annular lens area A2 into substantially zero, the light transmitted through the annular lens area A2 forms the optical path shown as the solid lines in Figure 2B, and forms the optimal spot on the information recording surface 31B of the thick optical disk 30B. When the working distance "WD2" is the optimal working distance for reproduction of the thick optical disk 30B, the annular lens area A2 increases efficiency of utilization of the light used and increases the numerical aperture as well. In this case, the inner area A1 maintains spherical aberration which is sufficiently small for reproduction of the thick optical disk 30B. The spherical aberration generated by the inner area A1 is minimized and total wavefront aberration is about 0.07λrms. Thus, the light transmitted through the inner area A1 and the annular lens area A2 forms a spot having a reduced size of 15% or more without increasing the optical aberration on the information recording surface 31B of the thick optical disk 30B, as compared with a case when the annular lens area A2 has the same aspherical surface shape as that of the inner area A1. Thus, it is possible to reproduce an optical recording medium such as an existing LD requiring a high density, as well as a CD. In this case, the light transmitted through the outer area A3 is scattered and does not influence the optical spot formed on the information recording surface 31B of the thick optical disk 30B. The optical path of the light transmitted through the outer area A3 is shown as the dotted lines in Figure 2B. Thus, a single optical spot can be formed on the information recording surface 31B. Examples of the working distances described above and shown in Figures 2A and 2B are WD1=1.897mm and WD2=1.525mm.

When the recorded information is read, the thin optical disk 30A uses the light of the relatively short wavelength, while the thick optical disk 30B uses both the light of the short wavelength and the relatively long wavelength. Therefore, when the thin optical disk 30A is a DVD and the thick optical disk 30B is a CD, an LD, CD-RW or a CD-R, the inner area A1 and the outer area A3 have the aspherical surface shapes optimized to the information recording surface of the DVD, and the inner area A1 and the annular lens area A2 have the aspherical surface shapes where aberration is corrected and the working distance is optimized so that the information can be reproduced with respect to the information recording surface of the CD, the LD or CD-RW or the CD-R. The annular lens area A2 among the areas A1, A2 and A3 has an aspherical surface shape determined by the following equation (6) expressing the aspherical surface.

$$Z(h) = \frac{h^2/R}{1 + \sqrt{(1-(1+K)h^2/R^2)}} + Ah^4 + Bh^6 + Ch^8 + Dh^{10} + Z_{offset} \qquad (6)$$

In the above equation (6), a function "Z" is a distance from the surface perpendicular to the optical axis and passing through the vertex V1 of the objective lens 20 to the lens surface 22 lying on the light source side of the objective lens 20. A variable "h" is a distance from the axis of the objective lens 20 to a particular point perpendicular to the axis. A constant "R" is a curvature which becomes a reference to determine an aspherical surface shape. $Z_{offset}$ is a parameter which is newly introduced to express a step difference between the annular lens area A2 and the inner area A1. Since the equation (6) is well known to a person who has an ordinary skill in the art, a detailed description thereof will be omitted. The annular lens area A2 has a protruded shape or a recessed shape when compared with the inner area A1 and the outer area A3. The annular lens area A2 of the protruded shape is enlarged and shown in Figure 2D. The aspherical surface shapes possessed by the inner area A1 and the outer area A3 can be expressed by removing the offset component $Z_{offset}$ in the equation (6). The width of the annular lens area A2 is determined to provide the spot optimized for reproducing the relatively thick optical disk, and occupies at least 10% of an incident surface 22 of the objective lens 20 to which the light is incident from the light source. In case of a quantitative expression, the width of the annular lens area A2 has a range between about 100 and 300μm.

The data obtained to provide the optimal aspherical surface shapes to the area A1, A2 and A3 is represented in the following table.

Table

| LENS SURFACE | CURVATURE | ASPHERICAL SURFACE COEFFICIENT | THICKNESS | REFRACTIVE INDEX |
|---|---|---|---|---|
| INNER AREA (A1)/ OUTER AREA (A3) | 2.13482 | K: -0.425667 <br> A: -0.822095E-03 <br> B: -0.249645E-03 <br> C: -0.106803E-03 <br> D: -0.194864E-03 <br> $Z_{offset}$: 0.0 | 1.795 | 1.5864 |
| ANNULAR LENS AREA (A2) | 2.14101 | K: -0.425667 <br> A: -0.362745E-03 <br> B: -0.259541E-03 <br> C: -0.665620E-03 <br> D: -0.620804E-03 <br> $Z_{offset}$: -0.0012 | 1.795 | 1.5864 |

Table   (continued)

| LENS SURFACE | CURVATURE | ASPHERICAL SURFACE | THICKNESS | REFRACTIVE INDEX |
|---|---|---|---|---|
| LENS SURFACE (24) TOWARD OPTICAL DISK | -14.39337 | K: 8.578602<br>A: 0.897734E-02<br>B: -0.341346E-02<br>C: -0.762226E-03<br>D: -0.665163E-04 | | |
| OPTICAL DISK | 0 | | 1.2/0.6 | 1.58 |

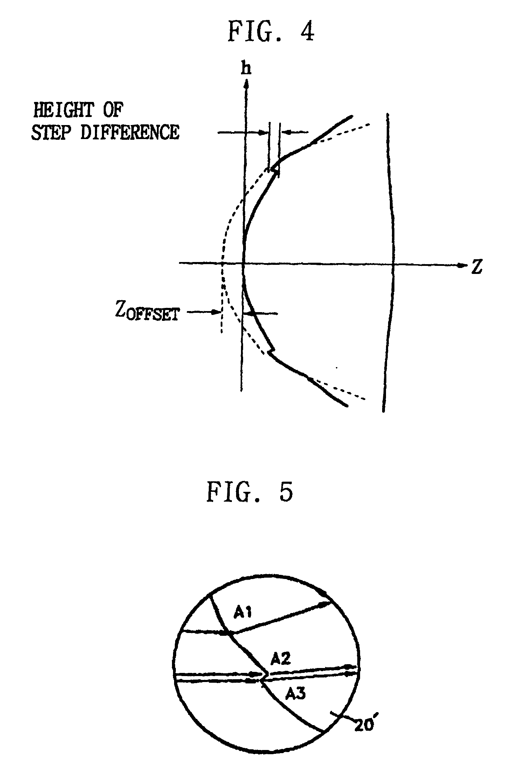

When the aspherical surface shapes of the areas A1, A2 and A3 are determined by the equation (6) and the above Table, the imaginary surface which extends from the aspherical surface of the annular lens area A2 expressed as the dotted line in Figure 4 becomes farther than the aspherical surface of the inner area A1 from the vertex V1 of the objective lens 20.

However, to easily form the areas A1, A2 and A3 of the aspherical surface shapes on the lens surface lying on the light source side, it is preferable that the annular lens area A2 is worked after working the inner area A1 and the outer area A3 primarily. Thus, the ring-shaped annular lens area A2 has a step difference at a region of contact with the inner area A1 contacts or the outer area A3.

Figure 4 shows an objective lens 20 which is worked so that a step difference exists in a region where the inner area A1 contacts the annular lens area A2. Figure 5 shows an objective lens 20' which is worked so that a step difference exists in a region where the annular lens area A2 contacts the outer area A3. Such step differences generate aberration due to a light path difference between the light passing through the inner area A1 and the annular lens area A2. The step differences have a height by which optical aberration due to the light path difference between the light passing through the inner area A1 and the annular lens area A2 can be removed with respect to the light of a relatively long wavelength emitted from the light source or the light for reproduction of the thick optical disk. Particularly, the height of the step difference is determined so that a light path difference between the light transmitted through the annular lens area A2 and the light transmitted through the inner area A1 of the objective lens 20 becomes an integer multiple of the wavelength of the used light as shown in Figure 3B. The step difference height is determined to be a value by which the optical aberration due to the light path difference can be removed by taking the offset $Z_{offset}$ in the equation (6) and the width of the annular lens area A2 into consideration. Preferably, the step difference height is approximately 1μm~-1.5μm according to the refractive index of the objective lens.

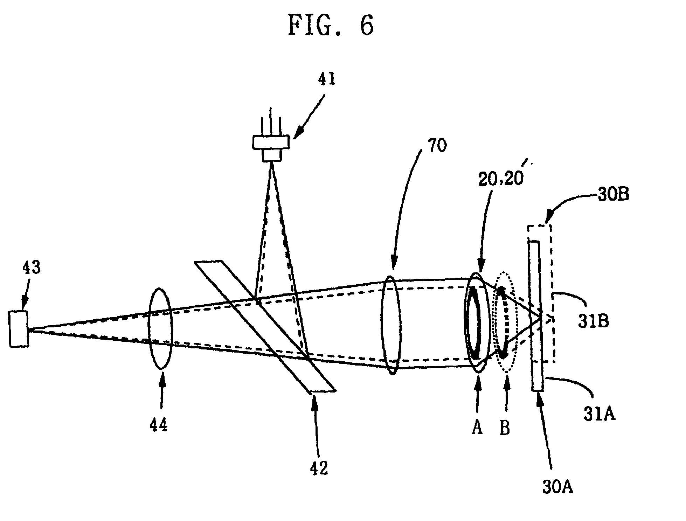

Figure 6 shows a first type of optical pickup having a single light source adopting an objective lens 20 or 20' according to the first and second embodiments of the present invention. The optical pickup shown in Figure 6 has a typical optical system, which is compatible with optical disks of various different formats using the identical wavelength of light, by using the objective lens 20 or 20' according to the first and second embodiments of the present invention. The optical source 41 emits the laser beam of a particular wavelength. A light detector 43 is designed so that the light transmitted through the outer area A3 of the objective lens 20 or 20' is not detected during reproduction of the thick optical disk 30B. That is, the light detector 43 is designed so that only the light transmitted through the inner area A1 and the annular lens area A2 of the objective lens 20 or 20' is detected during reproduction of information from the thick optical disk 30B.

For clarity, a case where the optical pickup of Figure 6 includes the objective lens 20 or 20' and the optical source 41 emits the light of 650nm wavelength will be described. The (light) rays of 650nm wavelength emitted from the light source 41 are reflected from a beam splitter 42. The beam splitter 42 reflects about 50% of the incident light and the reflected rays become substantially parallel by a collimating lens 70. Since the (light) rays incident from the light source toward the objective lens 20 or 20' can be made into substantially parallel light using the collimating lens 70, a more stable read operation can be performed. When a reproduction operation with respect to a thin disk 30A, for example, a DVD is performed, the (light) rays transmitted through the collimating lens 70 are focused in the form of a beam spot on an information recording surface 31A of the thin disk 30A by the objective lens 20 or 20'. In this case, the objective lens 20 or 20' has a working distance "WD1" and is shown as a solid line in Figure 6 at position A. Therefore, the rays of 650nm wavelength form a light path shown as the solid line in Figure 6. The light reflected from the information recording surface 31 A of the thin disk 30A is transmitted through the objective lens 20 or 20' and the collimating lens 70, and then is incident on the beam splitter 42. The beam splitter 42 transmits about 50% of the incident light and the transmitted light is focused into the light detector 43 by a light detection lens 44. Here, the light transmitted through the inner area A1 and the outer area A3 of the objective lens 20 or 20' forms a spot of a particular size on the information recording surface 31A of the thin disk 30A, by which information can be read from the information recording surface 31A of the thin disk 30A. Meanwhile, the light transmitted through the annular lens area A2 of the objective lens 20 or 20' forms a band in a scattered form at a position deviated by about 5μm on the disk 31B from the position of the spot formed by the light transmitted through the inner area A1 and the outer area A3. Thus, the light transmitted through the annular lens area A2 is not detected by the light detector 43 and does not function as noise with respect to an effective reproduction signal during reproduction of data from the thin disk 30A.

When a reproduction operation with respect to a thick disk 30b, for example, a CD or LD, is performed, the light transmitted through the collimating lens 70 is focused in the form of a beam spot on an information recording surface 31B of the thick disk 30B by the objective lens 20 or 20' at position B. In this case, the objective lens 20 or 20' has a working distance "WD2" and is shown as a dotted line in Figure 6. Therefore, the light forms an optical path shown as the dotted line in Figure 6. Here, the light transmitted through the inner area A1 and the annular lens area A2 of the objective lens 20 or 20' forms a spot of a size on the information recording surface 31B of the thick disk 30B, by which information can be read from the information recording surface 31B of the thick disk 30B. Meanwhile, the light transmitted through the outer area A3 of the objective lens 20 or 20' forms a spot having a relatively weak intensity and lying at a position deviated from the position of the spot formed by the light transmitted through the inner area A1 and the annular lens area A2. Thus, the light detector 43 can read information from the thick disk 30B using the light transmitted through the inner area A1 and the annular lens area A2 of the objective lens 20 or 20'.

In more detail, the light transmitted through the inner area A1 generates spherical aberration on the information recording surface 31B of the thick disk 30B. However, the spherical aberration has a sufficiently small amount to read the signal from the thick disk 30B and the minimized optical aberration is maintained by defocusing the light by the amount of the spherical aberration at the optical axis. The lens curvature and an aspherical surface coefficient of the annular lens area A2 are corrected for a non-aberration optical system at the state where the working distance is adjusted to about 10μm, so that additional spherical aberration is not generated. Accordingly, the numerical aperture increases without increasing the optical aberration and the size of the spot is reduced. Thus, an existing optical disk such as an LD requiring a higher-density than a CD can be reproduced. For reference, a spot size of about 1.2μm is needed to reproduce the LD, and that of about 1.4μm is needed to reproduce the CD. A spot size of about 0.9μm is needed to reproduce the DVD. As a result, the present invention can reproduce the various disks such as DVD, LD and CD, using a simple optical pickup.

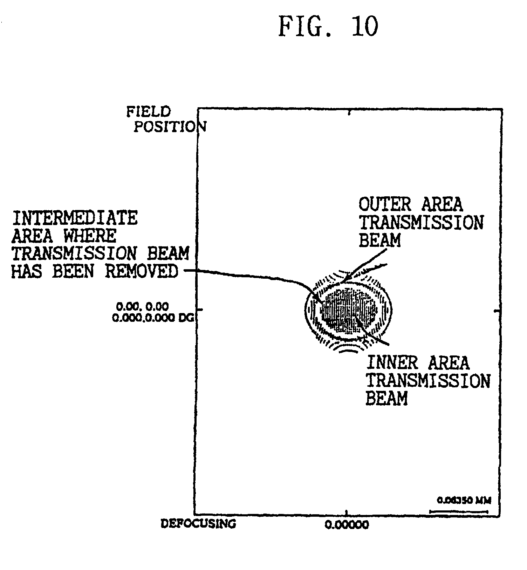

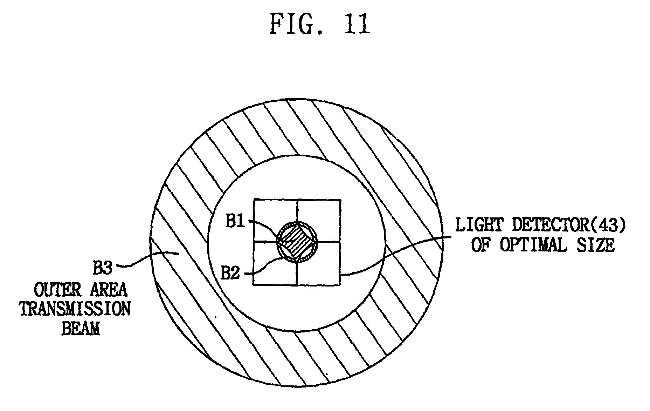

Figure 10 shows a distribution of the light in the light detector 43 when information from a thin disk 30A is reproduced according to first and second embodiments of the present invention. In Figure 10, dark portions are due to the light transmitted through the inner area A1 and the outer area A3 of the objective lens 20 or 20' and are detected as an efficient reproduction signal. However, bright portions between the dark portions represent that the light transmitted through the annular lens area A2 of the objective lens 20 or 20' is not detected in the light detector 43 and is not detected as an efficient reproduction signal. Figure 11 shows distribution of the light beams in the light detector 43 when information from a thick optical disk 30B is reproduced using the objective lens 20 or 20' according to the present invention. A notation "B1" shows a distribution of the light transmitted through the inner area A1 in the light detector, "B2" shows a distribution of the light transmitted through the annular lens area A2, and "B3" shows a distribution of the light transmitted through the outer area A3. The light forming the B1 and B2 distributions as shown in Figure 11 is detected as an efficient signal in the light detector 43, and the light forming the B3 distribution is not detected as an efficient reproduction signal.

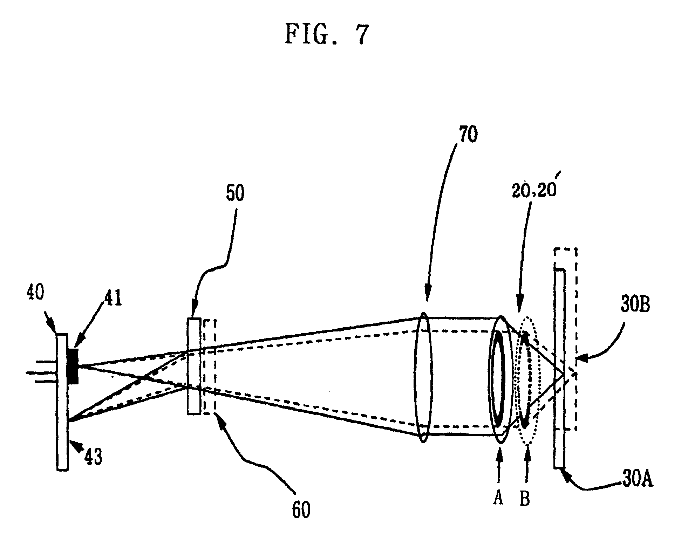

Figure 7 shows a modification of the optical system of the optical pickup shown in Figure 6. In Figure 7, a unit 40 includes a light source 41 and a light detector 43 which are formed in a single module. A holographic beam splitter 50 is a polarizing hologram with a high optical efficiency, and obtains a high optical efficiency by using a quarter wave plate 60. It is preferable that a polarizing hologram should be replaced by a general hologram in the case when the quarter wave plate 60 is not used. The (light) rays of 650nm from the light source 41 are transmitted through the holographic beam splitter 50 and the quarter wave plate 60, and then become parallel rays by the collimating lens 70. The objective lens 20 or 20' focuses the light incident from the collimating lens 70 on the information recording surface 31A of the thin optical disk 30A or the information recording surface 31B of the thick optical disk 30B, in the form of an optical spot. In the optical pickup shown in the Figure 7, since the objective lens 20 or 20' is the same as that in Figure 6, a detailed description thereof will be omitted. The light reflected from the information recording surface 31A or 31B is finally converged to be focused on the light detector 43 by the hologram beam splitter 50.

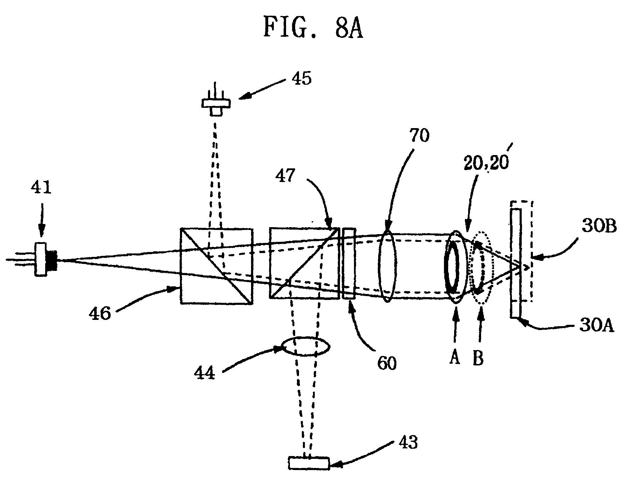

Figure 8A shows an optical pickup having an objective lens 20 or 20', two light sources 41 and 45 and a single light detector 43 according to the first and second embodiments of the present invention. The light source 41 emits a laser beam of 650nm and the light source 45 emits a laser beam of 780nm. The 780nm light source should be used for a CD, CD-RW, LD or a CD-R disk, and the 650nm light source should be used for a DVD, CD or CD-RW disk. When the light source 41 is used, the emitted light rays form an optical path shown as a solid line in Figure 8A, in which case the objective lens 20 or 20' is shown as a solid line at position A. When the light source 45 is used, the emitted light rays form an optical path shown as a dotted line, in which case the objective lens 20 or 20' is shown as a dotted line at position B. The optical spot focused on the thick optical disk 30B or the thin optical disk 30A by the objective lens 20 or 20' is the same as that shown in Figure 6.

A beam splitter 46 is a colour separable splitter, which transmits the light supplied from the light source 41 and reflects the light supplied from the light source 45. The light reflected from the beam splitter 46 is incident on a polarizing beam splitter 47. The polarizing beam splitter 47 has an optical characteristic which transmits or reflects linearly polarized beams, which operates with respect to the light of 650nm and 780nm wavelengths. The polarizing beam splitter 47 transmits the light incident from the beam splitter 46, and the transmitted light becomes a circularly polarized beam by a quarter wave plate 60. The circularly polarized beam is focused on the information recording surface of the thin optical disk 30A or the thick optical disk 30B of the objective lens 20 or 20'. The light reflected from the information recording surface passes through the objective lens 20 or 20' and the collimating lens 70 and then becomes linearly polarized light by the quarter wave plate 60. The linearly polarized light is reflected from the polarizing beam splitter 47 and the reflected light is focused into the light detector 43 by the light detection lens 44. The polarizing beam splitter 47 is replaced by a beam splitter which partially transmits and reflects the incident light when the quarter wave plate 60 is not used.

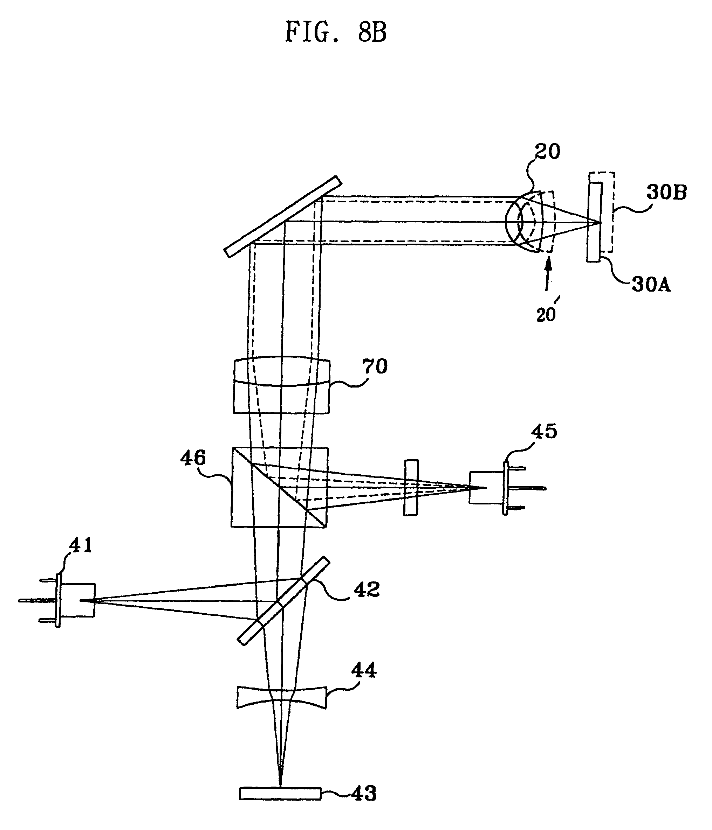

An optical pickup having an objective lens, two light sources, a single light detector, and a plate-type beam splitter 42, can be used as shown in Figure 8B. Figure 8B shows a modification of the optical pickup shown in Figure 8A, by replacing a cube-type beam splitter with a plate-type beam splitter. In addition, the two light sources 41 and 45 face in opposite directions relative to one another and the light detector faces at a 90° angle to the light sources 41 and 45. This is in contrast to the optical pickup shown in Figure 8A, wherein the light sources 41 and 45 face at right angles relative to each other and that the light detector 43 faces in an opposite direction to that of the light source 45 and at a right angle to the light source 41.

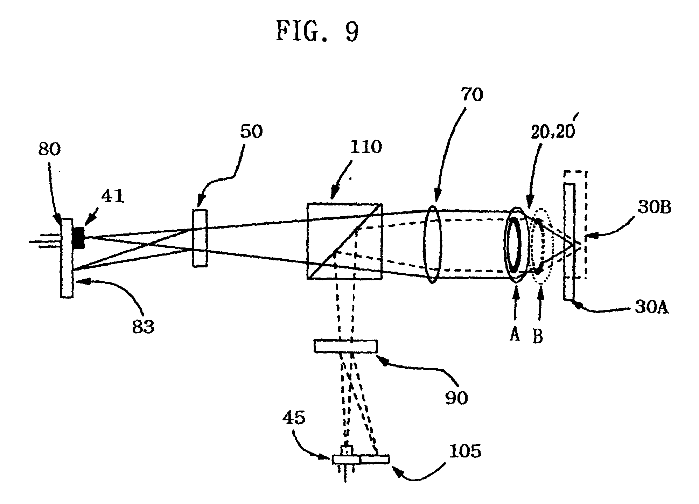

Figure 9 shows an optical pickup having an objective lens 20 or 20', two light sources 41 and 45 and two light detectors 83 and 105 according to the first and second embodiments of the present invention. In Figure 9, the light source 41 emits (light) rays having a wavelength of 650nm, the light detector 83 corresponds to the light source 41, and the light source 41 and the light detector 83. Reference numerals 45 and 105 are a light source and a light detector, respectively, for 780nm wavelength light, and 110 is a beam splitter. Other optical elements are the same as those shown in Figures 8A and 8B. Since the optical pickup system shown in the Figure 9 can be understood by a person skilled in the art based on the description provided regarding Figures 8A and 8B, a detailed description thereof will be omitted.

Up to now, the objective lens according to the present invention has been described with reference to the optical pickup. However, it is apparent to one having an ordinary skill in the art that the objective lens according to the present invention can be applied to a microscope or an optical pickup estimating apparatus.

As described above, the optical pickup according to the present invention is compatible with the disks having various different formats irrespective of the thickness or recording density of the disk, and an excellent reading signal can be obtained from the used disk. Also, the objective lens according to the present invention can be manufactured at low costs by using an injection molding. Particularly, when two or more wavelengths are used for optical disk compatibility, an optical pickup can be made using a single objective lens and a single light detector.

While only certain embodiments of the invention have been specifically described herein, it will be apparent that numerous modifications may be made thereto within the scope of the claims.

**Claims**

**1.** An objective lens (20, 20$^1$) compatible with at least first (30A) and second (30B) media having respective different thicknesses and information recording surfaces (31A, 31B) which store information, the objective lens (20) comprising:

an inner area (A1), an annular lens area (A2) and an outer area (A3) centered at a vertex (V1), the annular lens area (A2) having a ring shape and dividing the inner area (A1) from the outer area (A3), wherein the inner area (A1), the annular lens area (A2) and the outer area (A3) have aspherical shapes so that, in the case of reading the first medium (30A), light transmitted through the inner area (A1) and the outer area (A3) is focused into a single light spot by which information is read from the information recording surface (31A) of the first medium (30A) and light transmitted through the annular lens area (A2) is scattered so as not to be focused on the information recording surface (31A) of the first medium (30A) and, in the case of reading the second medium (30B), the light transmitted through the inner area (A1) and the annular lens area (A2) is focused into a single light spot by which information is read from the information recording surface (31B) of the second medium (30B) and light transmitted through the outer lens area (A3) is scattered so as not to be focused on the information recording surface (31B) of the second medium (30B) and wherein the second medium (30B) is thicker than the first medium (30A), the objective lens being **characterised by** a difference $\Delta Z$ between a

focal distance of the annular lens area (A2) and that of the inner area (A1) is the same as a defocusing amount determined by the following relationship:

$$\Delta Z = -(2W_{40}) / (NA)^2$$

wherein NA is a numerical aperture in the inner area and $W_{40}$ is a spherical aberration coefficient when the second medium is used.

2. An objective lens (20, 20[1]) according to claim 1, wherein a surface of the annular lens area (A2) forms a step difference for the surface of one of the inner (A1) and outer (A2) areas.

3. An objective lens (20, 20[1]) according to claim 2, wherein the surface of the annular lens area (A2) forms the step difference with the surface of the inner area (A1), wherein the step difference is a value such that a light path difference between the light passing through the inner area (A1) and the light passing through the annular lens area (A2) is an integer multiple of a wavelength of the light emitted from the light source (41).

4. An objective lens (20, 20[1]) according to claim 2, wherein the surface of the annular lens area (A2) forms the step difference with the surface of the outer area, (A3) wherein the step difference is a value such that a light path difference between the light passing through the inner area (A1) and the light passing through the annular lens area (A2) is an integer multiple of a wavelength of the light emitted from the light source (41).

5. An optical pickup in an optical device compatible with at least first and second optical recording media having different thicknesses, the optical pickup comprising:

a first light source (41) to emit light toward said objective lens, the objective lens (20, 20[1]) being arranged to focus the fist light emitted from the light source (41) into a single light spot on the information recording surface of a given optical recording medium (30A, 30B) ; and

a light detector (43) to detect light transmitted through the objective lens (20, 20[1]) after being reflected from the information recording surface (31A, 31B) of the optical recording medium (30A, 30B) on which the light spot is focused,

the objective lens (20, 20[1]) being compatible with at least the first (30A) and second (30B) media having respective different thicknesses and information recording surfaces which store information, the objective lens comprising:

an inner area (A1), an annular lens area (A2) and an outer area (A3) centered at a vertex (V1), the annular lens area (A2) having a ring shape and dividing the inner area (A1) from the outer area (A3), wherein the inner area (A1), the annular lens area (A2) and the outer area (A3) have aspherical shapes so that, in the case of reading the first medium (30A), light transmitted through the inner area (A1) and the outer area (A2) is focused into a single light spot by which information is read from the information recording surface of the first medium (30A) and light transmitted through the annular lens area (A2) is scattered so as not to be focused on the information recording surface of the first medium (30A) and, in the case of reading the second medium (30B), the light transmitted through the inner area (A1) and the annular lens area (A2) is focused into a single light spot by which information is read from the information recording surface (31B) of the second medium (30B) and light transmitted through the outer lens area (A3) is scattered so as not to be focused on the information recording surface of the second medium (30B) and wherein the second medium (30B) is thicker than the first medium (30A) the optical pickup being **characterised in that** in the objective lens (20, 20[1]) there is a difference $\Delta Z$ between a focal distance of the annular lens area and that of the inner area is the same as a defocusing amount determined by the following relationship:

$$\Delta Z = -(2W_{40}) / (NA)^2$$

wherein NA is a numerical aperture in the inner area and $W_{40}$ is a spherical aberration coefficient when the second medium is used.

**6.** The optical pickup according to claim 5, wherein the objective lens (20, 20[1]) has a working distance in such a manner that the light transmitted through the inner area (A1) is focused into a single light spot having minimum optical aberration on the information recording surface of the second medium (30B) during reading of the second medium (30B).

**7.** An optical pickup according to claim 6, wherein the aspherical surface shape of the inner area (A1) is such that the light transmitted through the inner area (A1) is focused into a single light spot on the information recording surface of the first optical medium (30A), and the same light is focused into an optical spot having minimum optical aberration on the information recording surface of the second optical medium (30B) during reproduction of the second optical medium with said working distance.

**8.** An optical pickup according to claim 6, wherein the aspherical shape of the annular lens area (A2) is such that the light transmitted through the annular lens area (A2) is focused into a single light spot having no spherical aberration on the information recording surface of the second optical recording medium (30B) during reproduction of the second optical recording medium (30B) having a thick substrate.

**9.** An optical pickup according to any of claims 5 to 8, further comprising at least a second light source (45), said second light source (45) emitting light of a different wavelength to light emitted from the first light source (41).

**10.** An optical pickup according to claim 9, further comprising a beam splitter (46) having a beam splitting characteristic with respect to each of the plurality of the beams respectively emitted from the first light source (41) and the at least second light source (45).

**11.** An objective lens according to any of claims 1 to 4 or an optical pickup device as claimed in any of claims 5 to 10, wherein the inner area (A1) of the objective lens (20, 20[1]) has a numerical aperture value NA which satisfies the following equation:

$$0.8\lambda/\mathrm{NA} \sim \text{ spot size}$$

where $\lambda$ represents the wavelength of light emitted from the light source and the spot size is a size of a spot that the light passing through the objective lens (20, 20[1]) forms on a disk.

**12.** The objective lens or optical pickup as claimed in claim 11, wherein the objective lens (20, 20[1]) has a defocused coefficient $W_{20}$ which minimises an optical aberration according to the following equation:

$$W_{20}=-W_{40},$$

wherein $W_{40}$ is a spherical aberration coefficient produced due to a difference in the first and second thicknesses.

**13.** The optical pickup or objective lens as claimed in claim 12, wherein a defocus amount $\Delta Z$ of the objective lens (20, 20[1]) follows the following equation:

$$\Delta Z=-(2W_{40}) / (\mathrm{NA})^{2},$$

wherein NA is a numerical aperture value of the inner area.

**14.** An optical pickup as claimed in any of claims 5 to 13, further comprising: a separation unit (47) to separate incident light transmitted from said light source (41, 45) from light reflected by the disk.

**15.** An optical pickup as claimed in claim 14, further comprising:

a collimating lens (70) disposed in a linear path between the objective lens (20, 20[1]) and the light detector (43) to collimate the incident light separated by the separation unit (47) and to transmit the reflected light from the disk towards the separation unit (47); and

a light detection lens (44) to focus the reflected light passing through the separation unit (47) toward the detector (43).

**Patentansprüche**

1.  Objektivlinse (20, 20'), die mit wenigstens einem ersten (30A) und einem zweiten (30B) Medium mit jeweils unterschiedlicher Dicke und Informationsaufzeichnungsoberfläche (31A, 31B) zum Speichern von Information kompatibsl ist, wobei die Objektivlinse (20) umfasst:

    einen Innenbereich (A1). einen ringförmigen Linsenbereich (A2) und einen Außenbereich (A3), die bei einem Scheitel (V1) zentriert sind, wobei der ringförmige Linsenbereich (A2) den Innenbereich (A1) von dem Außenbereich (A3) trennt, wobei der Innenbereich (A1), der ringförmige Linsenbereich (A2) und der Außenbereich (A3) asphärische Formen aufweisen, so dass wenn das erste Medium (30A) gelesen wird, das durch den Innenbereich (A1) und den Außenbereich (A3) übertragene Licht in einen einzigen Punkt fokussiert wird, durch den Information von der Informationsaufzeichnungsoberfläche (31A) des ersten Mediums (30A) gelesen wird, und das durch den ringförmigen Linsenbereich (A2) übertragene Licht gestreut wird, so dass es nicht auf die Informationsaufzeichnungsoberfläche (31A) des ersten Mediums (30A) fokussiert wird, während wenn das zweite Medium (30B) gelesen wird, das durch den Innenbereich (A1) und den ringförmigen Linsenbereich (A2) übertragene Licht in einen einzigen Lichtpunkt fokussiert wird, durch den Information von der Informationsaufzeichnungsoberfläche (31B) des zweiten Mediums (30B) gelesen wird, und das durch den Außenbereich (A3) übertragene Licht gestreut wird, so dass es nicht auf die Informationsaufzeichnungsoberfläche (31B) des zweiten Mediums (30B) fokussiert wird, wobei das zweite Medium (30B) dicker ist als das erste Medium (30A) und wobei die Objektivlinse **dadurch gekennzeichnet ist, dass** eine Differenz $\Delta Z$ zwischen einer Fokaldistanz des ringförmigen Linsenbereichs (A2) und derjenigen des Innenbereichs (A1) gleich einer Defokussierungsgröße ist, die durch die folgende Beziehung bestimmt wird:

    $$\Delta Z = -(2W_{40})/(NA)^2$$

    wobei NA eine numerische Apertur in dem Innenbereich ist und $W_{40}$ ein sphärischer Aberrationskoeffizient ist, wenn das zweite Medium verwendet wird.

2.  Objektivlinse (20, 20') nach Anspruch 1, wobei eine Oberfläche des ringförmigen Linsenbereichs (A2) eine Schrittdifferenz für die Oberfläche des Innenbereichs (A1) oder des Außenbereichs (A2) bildet.

3.  Objektivlinse (20, 20') nach Anspruch 2, wobei die Oberfläche des ringförmigen Linsenbereichs (A2) die Schrittdifferenz mit der Oberfläche des Innenbereichs (A1) bildet, wobei die Schrittdifferenz einen derartigen Wert aufweist, dass eine Lichtpfaddifferenz zwischen dem durch den Innenbereich (A1) hindurchgehenden Licht und dem durch den ringförmigen Linsenbereich (A2) hindurchgehenden Licht ein ganzzahliges Vielfaches einer Wellenlänge des Lichtes ist, das von der Lichtquelle (41) emittiert wird.

4.  Objektivlinse (20, 20') nach Anspruch 2, wobei die Oberfläche des ringförmigen Linsenbereichs (A2) die Schrittdifferenz zu der Oberfläche des Außenbereichs (A3) bildet, wobei die Schrittdifferenz einen derartigen Wert aufweist, dass eine Lichtpfaddifferenz zwischen dem durch den Innenbereich (A1) hindurchgehenden Licht und dem durch den ringförmigen Linsenbereich (A2) hindurchgehenden Licht ein ganzzahliges Vielfaches der Wellenlänge des von der Lichtquelle (41) emittierten Lichtes ist.

5.  Optischer Abnehmer in einer optischen Vorrichtung, die mit wenigstens einem ersten und einem zweiten optischen Aufzeichnungsmedium mit jeweils unterschiedlicher Dicke kompatibel ist, wobei der optische Abnehmer umfasst:

    eine erste Lichtquelle (41) zum Emittieren von Licht zu der Objektivlinse, wobei die Objektivlinse (20, 20') angeordnet ist, um das aus der Lichtquelle (41) emittierte erste Licht in einen einzigen Lichtpunkt auf der Informationsaufzeichnungsoberfläche eines bestimmten optischen Aufzeichnungsmediums (30A, 30B) zu fokussieren, und

    einen Lichtdetektor (43) zum Feststellen des durch die Objektivlinse (20, 20') übertragenen Lichtes, nachdem es von der Informationsaufzeichnungsoberfläche (31A, 31B) des optischen Aufzeichnungsmediums (30A, 30B) reflektiert wurde, auf die der Lichtpunkt fokussiert ist,

wobei die Objektivlinse (20, 20') mit wenigstens einem ersten (30A) und einem zweiten (30B) Medium mit jeweils unterschiedlicher Dicke und Informationsaufzeichnungsoberfläche zum Speichern von Information kompatibel ist, wobei die Objektivlinse umfasst:

einen Innenbereich (A1), einen ringförmigen Linsenbereich (A2) und einen Außenbereich (A3), die in einem Scheitel (V1) zentriert sind, wobei der ringförmige Linsenbereich (A2) den Innenbereich (A1) von dem Außenbereich (A3) trennt, wobei der Innenbereich (A1), der ringförmige Linsenbereich (A2) und der Außenbereich (A3) asphärische Formen aufweisen, so dass wenn das erste Medium (30A) gelesen wird, das durch den Innenbereich (A1) und den Außenbereich (A3) übertragene Licht in einen einzigen Punkt fokussiert wird, durch den Information von der Informationsaufzeichnungsoberfläche des ersten Mediums (30A) gelesen wird, und das durch den ringförmigen Linsenbereich (A2) übertragene Licht gestreut wird, so dass es nicht auf die Informationsaufzeichnungsoberfläche des ersten Mediums (30A) fokussiert wird. während wenn das zweite Medium (30B) gelesen wird, das durch den Innenbereich (A1) und den ringförmigen Linsenbereich (A2) übertragene Licht in einen einzigen Lichtpunkt fokussiert wird, durch den Information von der Informationsaufzeichnungsoberfläche (31B) des zweiten Mediums (30B) gelesen wird, und das durch den Außenbereich (A3) übertragene Licht gestreut wird, so dass es nicht auf die Informationsaufzeichnungsoberfläche des zweiten Mediums (30B) fokussiert wird, wobei das zweite Medium (30B) dicker ist als das erste Medium (30A) und wobei der optische Abnehmer **dadurch gekennzeichnet ist, dass** in der Objektivlinse (20, 20') eine Differenz $\Delta Z$ zwischen einer Fokaldistanz des ringförmigen Linsenbereichs und derjenigen des Innenbereichs gleich einer Defokussierungsgröße ist, die durch die folgende Beziehung bestimmt wird:

$$\Delta Z = -(2W_{40})/(NA)^2$$

wobei NA eine numerische Apertur in dem Innenbereich ist und $W_{40}$ ein sphärischer Aberrationskoeffizient ist, wenn das zweite Medium verwendet wird.

6. Optischer Abnehmer nach Anspruch 5, wobei die Objektivlinse (20, 20') eine derartige Arbeitsdistanz aufweist, dass das durch den Innenbereich (A1) übertragene Licht in einen einzigen Lichtpunkt mit einer minimalen sphärischen Aberration auf der Informationsaufzeichnungsoberfläche des zweiten Mediums (30B) während des Lesens des zweiten Mediums (30B) fokussiert wird.

7. Optischer Abnehmer nach Anspruch 6, wobei die asphärische Form des Innenbereichs (A1) derart beschaffen ist, dass das durch den Innenbereich (A1) übertragene Licht in einen einzigen Lichtpunkt auf der Informationsaufzeichnungsoberfläche des ersten optischen Mediums (30A) fokussiert wird, wobei dasselbe Licht in einen optischen Punkt mit einer minimalen optischen Aberration auf der Informationsaufzeichnungsoberfläche des zweiten optischen Mediums (30B) während der Wiedergabe des zweiten optischen Mediums mit der Arbeitsdistanz fokussiert wird.

8. Optischer Abnehmer nach Anspruch 6, wobei die asphärische Form des ringförmigen Linsenbereichs (A2) derart beschaffen ist, dass das durch den ringförmigen Linsenbereich (A2) übertragene Licht in einen einzigen Lichtpunkt mit keiner sphärischen Aberration auf die Informationsaufzeichnungsoberfläche des zweiten optischen Aufzeichnungsmediums (30B) während der Wiedergabe des zweiten optischen Aufzeichnungsmediums (30B) mit einem dicken Substrat fokussiert wird.

9. Optischer Abnehmer nach wenigstens einem der Ansprüche 5 bis 8, der weiterhin wenigstens eine zweite Lichtquelle (45) umfasst, wobei die zweite Lichtquelle (45) Licht mit einer Wellenlänge emittierte, die sich von derjenigen des aus der ersten Lichtquelle (41) emittierten Lichtes unterscheidet.

10. Optischer Abnehmer nach Anspruch 9, der weiterhin einen Strahlteiler (46) umfasst, der eine Strahlteilungskennlinie in Bezug auf jede aus der Vielzahl von Strahlen aufweist, die jeweils aus der ersten Lichtquelle (41) und der wenigstens einen zweiten Lichtquelle (45) emittiert werden.

11. Objektivlinse nach einem der Ansprüche 1 bis 4 oder optischer Abnehmer nach einem der Ansprüche 5 bis 10, wobei der Innenbereich (A1) der Objektivlinse (20, 20') einen numerischen Aperturwert NA aufweist, der die folgende Gleichung erfüllt:

$$0{,}8\lambda/NA \sim \text{Punktgröße}$$

wobei $\lambda$ die Wellenlänge der Lichtes wiedergibt, das aus der Lichtquelle emittiert wird, und die Punktgröße die Größe eines Punktes ist, den das durch die Objektivlinse (20, 20') hindurchgehende Licht auf einer Platte bildet.

12. Objektivlinse oder optischer Abnehmer nach Anspruch 11, wobei die Objektivlinse (20, 20') einen Defokussierungskoeffizienten $W_{20}$ aufweist, der eine optische Aberration in Übereinstimmung mit der folgenden Gleichung minimiert:

$$W_{20} = -W_{40}$$

wobei $W_{40}$ ein asphärischer Aberrationskoeffizient ist, der wegen einer Differenz zwischen der ersten und der zweiten Dicke erzeugt wird.

13. Optischer Abnehmer oder Objektivlinse nach Anspruch 12, wobei eine Defokussierungsgröße $\Delta Z$ der Objektivlinse (20, 20') der folgenden Gleichung folgt:

$$\Delta Z = -(2W_{40})/(NA)^2$$

wobei Na ein numerischer Aperturwert des Innenbereichs ist.

14. Optischer Abnehmer nach einem der Ansprüche 5 bis 13, der weiterhin umfasst: eine Trenneinheit (47) zum Trennen des von der Lichtquelle (41, 45) übertragenen einfallenden Lichtes von dem von der Platte reflektierten Licht.

15. Optischer Abnehmer nach Anspruch 14, der weiterhin umfasst:

eine Kollimatorlinse (70), die in einem linearen Pfad zwischen der Objektivlinse (20, 20') und dem Lichtdetektor (43) angeordnet ist, um das einfallende Licht zu kollimieren, das durch die Trenneinheit (47) getrennt wird, und das reflektierte Licht von der Platte zu der Trenneinheit (47) zu übertragen, und

eine Lichtdetektorlinse (44) zum Fokussieren des reflektierten Lichtes, das durch die Trenneinheit (47) hindurchgeht, auf den Detektor (43).

**Revendications**

1. Lentille convergente (20, $20_1$) compatible avec au moins des premier (30A) et second (30B) supports présentant des épaisseurs et des surfaces d'enregistrement d'informations (31A, 31B) respectives différentes destinées à stocker des informations, la lentille convergente comprenant :

une zone intérieure (A1), une zone de lentille annulaire (A2) et une zone extérieure (A3) centrée sur un sommet (V1), la zone de lentille annulaire (A2) ayant une forme d'anneau et séparant la zone intérieure (A1) de la zone extérieure (A3), dans laquelle la zone intérieure (A1), la zone de lentille annulaire (A2) et la zone extérieure (A3) ont des formes asphériques de telle sorte que, dans le cas de la lecture du premier support (30A), la lumière transmise par la zone intérieure (A1) et la zone extérieure (A3) est focalisée en un point lumineux unique au moyen duquel des informations sont lues sur la surface d'enregistrement d'informations (31A) du premier support (30A) et la lumière transmise au travers de la zone de lentille annulaire (A2) est dispersée afin de ne pas être focalisée sur la surface d'enregistrement d'informations (31A) du premier support (30A) et, dans le cas de la lecture du second support (30B), la lumière transmise au travers de la zone interne (A1) et de la zone de lentille annulaire (A2) est focalisée sur un point lumineux unique au moyen duquel les informations sont lues sur la surface d'enregistrement d'informations (31B) du second support (30B) et la lumière transmise par la zone de lentille extérieure (A3) est dispersée afin de ne pas être focalisée sur la surface d'enregistrement d'informations (31B) du second support (30B) et dans laquelle le second support (30B) est plus épais que le premier support (30A), la lentille convergente étant **caractérisée par** une différence $\Delta Z$ entre une distance focale de la zone de lentille annulaire (A2) et celle de la zone intérieure (A1) qui est identique à une valeur de défocalisation déterminée par la relation suivante :

$$\Delta Z = - (2W_{40})/(NA)^2$$

dans laquelle NA est une ouverture numérique dans la zone intérieure et $W_{40}$ est un coefficient d'aberration sphérique lors de l'utilisation du second support.

2. Lentille convergente (20, $20^1$) selon la revendication 1, dans laquelle une surface de la zone de lentille annulaire (A2) forme une différence de niveau pour la surface d'une des zones intérieure (A1) et extérieure (A2).

3. Lentille convergente (20, $20^1$) selon la revendication 2, dans laquelle la surface de la zone de lentille annulaire (A2) forme la différence de niveau avec la surface de la zone intérieure (A1), dans laquelle la différence de niveau est une valeur telle qu'une différence de trajectoire lumineuse entre la lumière traversant la zone intérieure (A1) et la lumière traversant la zone de lentille annulaire (A2) est un entier multiple d'une longueur d'onde de la lumière émise par la source lumineuse (41).

4. Lentille convergente (20, $20^1$) selon la revendication 2, dans laquelle la surface de la zone de lentille annulaire (A2) forme la différence de niveau avec la surface de la zone extérieure (A3), dans laquelle la différence de niveau est une valeur telle qu'une différence de trajectoire lumineuse entre la lumière traversant la zone intérieure (A1) et la lumière traversant la zone de lentille annulaire (A2) est un entier multiple d'une longueur d'onde de la lumière émise par la source lumineuse (41).

5. Capteur de lecture optique dans un dispositif optique compatible avec au moins des premier et second supports d'enregistrement optique présentant des épaisseurs différentes, le capteur de lecture optique comprenant :

une première source lumineuse (41) destinée à émettre de la lumière en direction de ladite lentille convergente, la lentille convergente (20, $20^1$) étant conçue pour focaliser la première lumière émise par la source lumineuse (41) en un point lumineux unique sur la surface d'enregistrement d'informations d'un support d'enregistrement optique donné (30A, 30B) ; et
un détecteur de lumière (43) destiné à détecter la lumière transmise par la lentille convergente (20, $20^1$) après réflexion par la surface d'enregistrement d'informations (31A, 31B) du support d'enregistrement optique (30A, 30B) sur lequel le point lumineux est focalisé,
la lentille convergente (20, $20^1$) étant compatible avec au moins les premier (30A) et second (30B) supports présentant des épaisseurs et des surfaces d'enregistrement d'informations (31A, 31B) respectives différentes destinées à stocker des informations, la lentille convergente comprenant :

une zone intérieure (A1), une zone de lentille annulaire (A2) et une zone extérieure (A3) centrée sur un sommet (V1), la zone de lentille annulaire (A2) ayant une forme d'anneau et séparant la zone intérieure (A1) de la zone extérieure (A3), dans laquelle la zone intérieure (A1), la zone de lentille annulaire (A2) et la zone extérieure (A3) ont des formes asphériques de telle sorte que, dans le cas de la lecture du premier support (30A), la lumière transmise par la zone intérieure (A1) et la zone extérieure (A3) est focalisée en un point lumineux unique au moyen duquel des informations sont lues sur la surface d'enregistrement d'informations (31A) du premier support (30A) et la lumière transmise au travers de la zone de lentille annulaire (A2) est diffusée afin de ne pas être focalisée sur la surface d'enregistrement d'informations du premier support (30A) et, dans le cas de la lecture du second support (30B), la lumière transmise au travers de la zone interne (A1) et de la zone de lentille annulaire (A2) est focalisée sur un point lumineux unique au moyen duquel des informations sont lues sur la surface d'enregistrement d'informations (31B) du second support (30B) et la lumière transmise par la zone de lentille extérieure (A3) est diffusée afin de ne pas être focalisée sur la surface d'enregistrement d'informations du second support (30B) et dans laquelle le second support (30B) est plus épais que le premier support (30A), le capteur de lecture optique étant **caractérisé en ce que**, dans la lentille convergente (20, $20^1$), la différence $\Delta Z$ entre une distance focale de la zone de lentille annulaire et celle de la zone intérieure (A1) est identique à une valeur de défocalisation déterminée par la relation suivante :

$$\Delta Z = - (2W_{40})/(NA)^2$$

dans laquelle NA est une ouverture numérique dans la zone intérieure et $W_{40}$ est un coefficient d'aberration sphérique lors de l'utilisation du second support.

**6.** Capteur de lecture optique selon la revendication 5, dans lequel la lentille convergente (20, 20$^1$) présente une distance de fonctionnement telle que la lumière transmise par la zone intérieure (A1) est focalisée en un point lumineux unique présentant une aberration optique minimale sur la surface d'enregistrement d'informations du second support (30B) lors de la lecture du second support (30B).

**7.** Capteur de lecture optique selon la revendication 6, dans lequel la forme de surface asphérique de la zone intérieure (A1) est telle que la lumière transmise par la surface intérieure (A1) est focalisée en un point lumineux unique présentant une aberration optique minimale sur la surface d'enregistrement d'informations du premier support optique (30A), et la même lumière est focalisée en un point lumineux présentant une aberration optique minimale sur la surface d'enregistrement d'informations du second support optique (30B) lors de la reproduction du second support optique à ladite distance de fonctionnement.

**8.** Capteur de lecture optique selon la revendication 6, dans lequel la forme asphérique de la zone de lentille annulaire (A2) est telle que la lumière transmise par la zone de lentille annulaire (A2) est focalisée en un point lumineux unique ne présentant aucune aberration sphérique sur la surface d'enregistrement d'informations du second support d'enregistrement optique (30B) lors de la reproduction du second support d'enregistrement optique (30B) présentant un substrat épais.

**9.** Capteur de lecture optique selon l'une quelconque des revendications 5 à 8, comprenant en outre au moins une seconde source lumineuse (45), ladite seconde source lumineuse (45) émettant de la lumière d'une longueur d'onde différente de la lumière émise par la première source lumineuse (41).

**10.** Capteur de lecture optique selon la revendication 9, comprenant en outre un diviseur de faisceau (46) présentant une caractéristique de division de faisceau relative à chacune des pluralités de faisceaux respectivement émis par la première source lumineuse (41) et la au moins seconde source (45).

**11.** Lentille convergente selon l'une quelconque des revendications 1 à 4 ou capteur de lecture optique selon l'une quelconque des revendications 5 à 10, dans lesquels la zone intérieure (A1) de la lentille convergente (20, 20$^1$) présente une valeur d'ouverture numérique NA qui satisfait l'équation suivante :

$$0,8\lambda/NA \sim \text{ taille du point de focalisation}$$

où $\lambda$ représente la longueur d'onde de la lumière émise par la source lumineuse et la taille du point de focalisation est une taille d'un point constitué sur un disque par la lumière qui traverse la lentille convergente (20, 20$^1$).

**12.** Lentille convergente ou capteur de lecture optique selon la revendication 11, dans lesquels la lentille convergente (20, 20$^1$) présente un coefficient de défocalisation $W_{20}$ qui minimise une aberration optique conformément à l'équation suivante :

$$W_{20} = -W_{40},$$

dans laquelle $W_{40}$ est un coefficient d'aberration optique produit du fait d'une différence des première et seconde épaisseurs.

**13.** Capteur de lecture optique ou lentille convergente selon la revendication 12, dans lesquels une valeur de défocalisation $\Delta Z$ de la lentille convergente (20, 20$^1$) répond à l'équation suivante :

$$\Delta Z = - (2W_{40})/(NA)^2,$$

dans laquelle NA est une valeur d'ouverture numérique de la zone intérieure.

**14.** Capteur de lecture optique selon l'une quelconque des revendications 5 à 13, comprenant en outre : une unité de séparation (47) destinée à séparer la lumière incidente émise par ladite source lumineuse (41, 45) de la lumière réfléchie par le disque.

**15.** Capteur de lecture optique selon la revendication 14, comprenant en outre :

une lentille de collimation (70) disposée sur une trajectoire linéaire entre la lentille convergente (20, 20$^1$) et le détecteur optique (43) afin de collimater la lumière incidente séparée par l'unité de séparation (47) et de transmettre la lumière réfléchie par le disque en direction de l'unité de séparation (47) ; et

une lentille de détection optique (44) destinée à focaliser la lumière réfléchie qui traverse l'unité de séparation (47) en direction du détecteur (43).

FIG. 1A

## FIG. 1B

## FIG. 2A

FIG. 2B

FIG. 2C

## FIG. 2D

## FIG. 3A

LONGITUDINAL
SPHERICAL ABERRATION

## FIG. 3B

WAVEFRONT
ABERRATION ($\lambda$ rms)

## FIG. 4

HEIGHT OF
STEP DIFFERENCE

$Z_{OFFSET}$

## FIG. 5

A1

A2

A3

20'

FIG. 6

FIG. 7

EP 0 859 356 B1

# FIG. 8A

EP 0 859 356 B1

FIG. 8B

FIG. 9

EP 0 859 356 B1

# FIG. 10

FIELD
POSITION

INTERMEDIATE
AREA WHERE
TRANSMISSION BEAM
HAS BEEN REMOVED

OUTER AREA
TRANSMISSION
BEAM

INNER AREA
TRANSMISSION
BEAM

0.00, 0.00
0.000,0.000 DG

0.00350 MM

DEFOCUSING      0.00000

FIG. 11

B1

B3
OUTER AREA
TRANSMISSION
BEAM

B2

LIGHT DETECTOR(43)
OF OPTIMAL SIZE